# EUROPEAN PATENT SPECIFICATION

(11) **EP 1 630 450 B1**
(45) Date of publication and mention of the grant of the patent: **14.11.2007**
(21) Application number: 05018419.1
(22) Date of filing: 24.08.2005
(51) Int. Cl.: F16F 15/03

(54) **Damper**
Dämpfer
Amortisseur

(30) Priority: 25.08.2004 JP 2004244562
(43) Date of publication of application: 01.03.2006
(73) Proprietor: KAYABA INDUSTRY CO., LTD., Minato-Ku, Tokyo 105-6190 (JP)
(72) Inventor: Kondou, Takuhiro, Kayaba Industry Co., Ltd, Minato-ku Tokyo 105-6190 (JP)
(74) Representative: Rössig, Rolf

(56) References cited:
- US-A- 4 432 245
- PATENT ABSTRACTS OF JAPAN vol. 2003, no. 12, 5 December 2003 (2003-12-05) & JP 2003 343648 A (KAYABA IND CO LTD; FOUNDATION FOR THE PROMOTION OF INDUSTRIAL SCIENCE), 3 December 2003 (2003-12-03)
- PATENT ABSTRACTS OF JAPAN vol. 2003, no. 12, 5 December 2003 (2003-12-05) & JP 2003 343647 A (KAYABA IND CO LTD; FOUNDATION FOR THE PROMOTION OF INDUSTRIAL SCIENCE), 3 December 2003 (2003-12-03)

## Description

The present invention relates to a damper which reduces a relative displacement of a vehicle body and an axle by an electromagnetic force generated by a motor.

JP2003-343648A published by the Japan Patent Office discloses the following damper: A damper includes a ball screw nut and a screw shaft rotatably screwed in the ball screw nut and connects the screw shaft with a rotor shaft of a motor via a torsion bar. As a result, the damper converts linear motion of the ball screw nut into rotary motion of the screw shaft, transmits the rotary motion via the torsion bar to the rotor shaft of the motor to generate an electromagnetic force in the motor, and uses a torque against rotation of the rotor shaft resulting from the electromagnetic force as a damping force to suppress the linear motion of the ball screw nut.

However, in the above-mentioned damper, since the motor cannot detect a torque generated, it is impossible to keep track of a damping force produced by the damper.

Additionally, since a lower end of the rotor shaft of the motor and an upper end of the screw shaft are connected via a torsion bar, the damper increases in length by a length of the torsion bar. This impairs installability of the damper and also makes it difficult to ensure a stroke thereof.

It is an object of the present invention to improve controllability of a damper using a motor and also to decrease an overall length of the damper.

In order to achieve the above object, this invention provides a damper comprising a screw nut connected to either one of an axle and a vehicle body, a screw shaft rotatably screwed in the screw nut, and a motor which is connected to the other of the axle and the vehicle body and to which rotation of the screw shaft is transmitted, the motor comprising a hollow rotor shaft, an output shaft inserted into the rotor shaft, one end of the output shaft being connected to the rotor shaft and the other end of the , output shaft being connected to the screw shaft, and a detecting device which detects a torsion angle of the output shaft varying with a torque acting on the output shaft.

The details as well as other features and advantages of this invention are set forth in the remainder of the specification and are shown in the accompanying drawings.

### BRIEF DESCRIPTION OF THE DRAWINGS

FIG. 1 is a longitudinal sectional view showing a damper in a preferred embodiment of the present invention.

FIG. 2 is an exploded perspective view showing a coupling.

FIG. 3 is a longitudinal sectional view showing a motor of a damper in another preferred embodiment of the present invention.

### DETAILED DESCRIPTION OF PREFERRED EMBODIMENTS

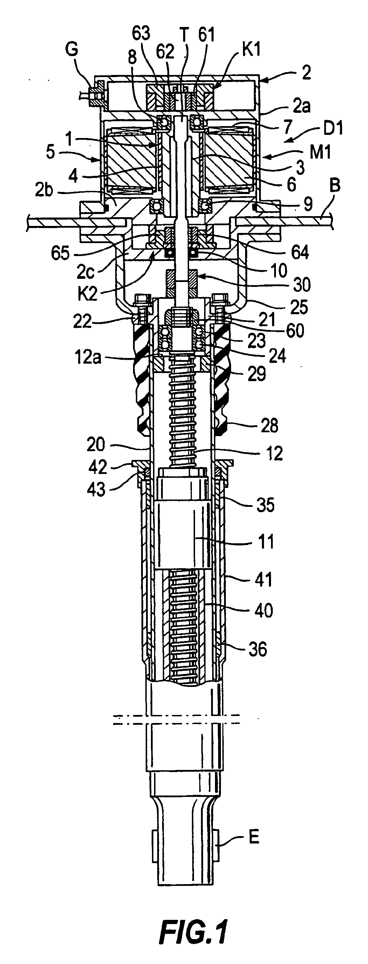

Hereinafter, the present invention will be described with reference to the accompanying drawings. As shown in FIG. 1, a damper D1 in a preferred embodiment is provided with a ball screw nut 11, a screw shaft 12, and a motor M1. The screw shaft 12 is rotatably screwed in the ball screw nut 11 and rotation of the screw shaft 12 is transmitted to the motor M 1.

The motor M 1 is provided with a case 2, a rotor 1, and a stator 5 as shown in FIG. 1. The rotor 1 is formed of a hollow rotor shaft 3, a magnet 4 attached to an outer periphery of the rotor shaft 3, and a torsion bar T as an output shaft inserted into the rotor shaft 3. The rotor 1 is rotatably supported in the case 2 via ball bearings 8 and 9.

The case 2 is formed of a bottomed cylindrical case body 2a having an opening with a flange, an inner lid 2b to close the opening, and a bottomed cylindrical outer lid 2c having an opening with a flange. The lower end face of the inner lid 2b and the flange of the outer lid 2c hold a vehicle body B of a vehicle therebetween. The motor M1 is firmly fixed to an inside of the vehicle body B using a bolt (not shown) to pass through the case body 2a, the inner lid 2b, the vehicle body B, and the outer lid 2c.

Each of the inner lid 2b and the outer lid 2c has a hole passing through an axis thereof, into which the rotor shaft 3 and the torsion bar T are inserted.

The motor M 1 may be fixed to the vehicle body B by welding or other fixing methods, but considering ease of maintenance, it is preferable to adopt a fixing method which enables the motor M 1 to be firmly fixed to the vehicle body B and also permits removal of the motor M1.

The stator 5 is formed of a core 6 as an armature core attached to an inner periphery of the case 2 in such a manner as to face the magnet 4 and a coil 7 wound around the core 6. The motor M 1 is constructed as a so-called brushless motor.

The magnet 4 is formed in an annular shape and has a split pole pattern in which the north pole and the south pole alternately appear along the circumference. The magnet 4 is formed by bonding a plurality of magnets in an annular shape.

The rotor shaft 3 is formed in a hollow, substantially bottomed cylindrical shape. Inside the rotor shaft 3, an upper end of the torsion bar T as an output shaft is fitted and fixed to the end of the rotor shaft 3. A shaft 62 to attach a sensing magnet 62 is provided outside the rotor shaft 3.

An inside diameter of the rotor shaft 3 is set at a value greater than an outside diameter of the torsion bar T so that an outer periphery of the torsion bar T is not in contact with an inner periphery of the rotor shaft 3, i.e. the rotor shaft 3 does not interfere with torsion of the torsion bar T.

The ball bearing 8 has its outer ring side fixed in the case body 2a. The ball bearing 9 has its outer ring side fixed to an inner periphery of the inner lid 2b. The rotor shaft 3 is inserted into each inner ring of the ball bearing 8 and the ball bearing 9 and is rotatably supported in the case 2.

A magnetometric sensor 63 is provided inside an upper portion of the case body 2a. The magnetometric sensor 63 is provided with a hall element and a magnetoresistive (MR) element or the like in such a manner as to face the sensing magnet 61 attached to an outer periphery of the shaft 62 of the rotor shaft 3. By combination of the sensing magnet 61 and the magnetometric sensor 63, which constitute a detecting device K1, it is possible to detect a rotation angle of the upper end of the rotor shaft 3, resultantly a rotation angle of the upper end of the torsion bar T fixed inside the rotor shaft 3.

A sensing magnet 64 is attached to the other end of the torsion bar T. A magnetometric sensor 65 is provided within the outer lid 2c in such a manner as to face the sensing magnet 64. A side portion of a lower end of the torsion bar T is inserted into an inner ring of a ball bearing 10 which has its outer ring fixed to an inner periphery of the outer lid 2c and is rotatably supported in the case 2 as the rotor shaft 3.

By combination of the sensing magnet 64 and the magnetometric sensor 65, which constitute a detecting device K2, it is possible to detect a rotation angle of the other end of the torsion bar T.

In the present embodiment, the detecting devices K1 and K2 are composed of the sensing magnets 61 and 64 and the magnetometric sensors 63 and 65, respectively, but these devices may be formed as a resolver wherein the sensing magnet is a rotor coil or resolver core and the magnetometric sensor is a stator coil. Alternatively, an optical or any other type of rotary encoder may be used to detect rotation angles of the upper and lower ends of the torsion bar T.

In the present embodiment, the output shaft is formed by the torsion bar T so that a difference in the rotation angle is easily made between the upper and lower ends of the output shaft, but a rod-like output shaft may be used. However, if the output shaft has a high torsional rigidity, it is preferable that as each of the detecting devices K1 and K2, the one having a high resolution be used.

The rotor shaft 3 may be formed in a cylindrical shape. In this case, the rotor shaft 3 is fixed to the outer periphery of the upper end of the output shaft. Further, it is recommended that the inside diameter of the rotor shaft 3 is set at a value greater than the outside diameter of the output shaft so as not to restrict the torsion of the output shaft.

The motor M 1 is connected to a control unit and an external power source (not shown) via an electric wire (not shown) guided into the case 2 through a grommet G provided at a side portion of the upper end of the case body 2a. Controlling a rotational torque acting on the rotor 1 enables a desired damping force to be obtained, and driving the motor M1 enables the damper D 1 to function not only as a damper but also as an actuator.

In the present embodiment, a brushless motor is used as the motor M1, but various motors, for instance, a DC or AC motor with a brush, an induction motor or the like may be used if used as a source of an electromagnetic force.

Further, in the present embodiment, since heat capacity is designed to be at a high level by an increased diameter of the motor M1, heat demagnetization of the magnet 4 and heat damage to the motor M 1 can be prevented. Also, the motor M 1 is designed to be short so that even if the motor M 1 is mounted inside the vehicle body B, it will not cause an obstruction.

On the other hand, the damper D 1 in the present embodiment includes the screw shaft 12 and the ball screw nut 11 rotatably screwed with the screw shaft 12 to convert expansion and contraction motion of the damper D 1 into rotary motion.

The screw shaft 12 is rotatably supported in an inner tube 20 via ball bearings 23 and 24. The ball bearings 23 and 24 are held in a cap 21 fitted inside an upper end of the inner tube 20. A flange 22 provided around an outer periphery of the cap 21 is fastened with a bolt to a cup-shaped connecting member 25 which has a hole in a bottom portion thereof and has an opening with a flange.

The ball bearings 23 and 24 are held between a shoulder 12a provided at an upper end of the screw shaft 12 and a nut 60 in order to prevent the screw shaft 12 from shaking with respect to the inner tube 20.

By fitting the outer lid 2c into an inner periphery of an upper end of the connecting member 25, the inner tube 20 is supported in the vehicle body B. The motor M1 and the connecting member 25 may be fastened to the vehicle body B with a bolt (not shown) used in fastening the motor M1 to the vehicle body B.

An elastic body such as a vibration-proof rubber may be disposed between the flange of the connecting member 25 and the outer lid 2c. In this case, vibration of the damper D 1 can be absorbed by the elastic body and consequently the vehicle's ride quality improves.

A flexible coupling 30 is connected to the upper end of the screw shaft 12. The lower end of the torsion bar T is inserted into and connected to an upper end of the flexible coupling 30. Rotation of the screw shaft 12 is transmitted via the flexible coupling 30 to the rotor 1 of the motor M1. The flexible coupling 30 is housed within the connecting member 25.

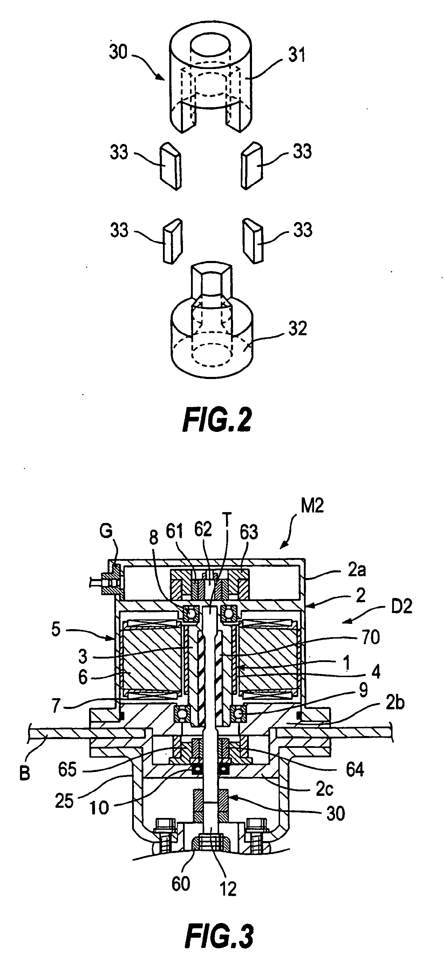

The flexible coupling 30 is composed of a pair of upper and lower engaging members 31 and 32 and elastic bodies 33 interposed between the engaging members 31 and 32 as shown in FIG. 2. One engaging member 31 is provided with a cylindrical body and a pair of projections standing from the cylindrical body, each of which has a sectorial transverse section, and the other engaging member 32 has the same shape as the engaging member 31. The engaging members 31 and 32 are fitted together in such a way that the projections of the one engaging member are inserted between the projections of the other engaging member, and the elastic bodies 33 are interposed between each of the projections of the one engaging member and each of the projections of the other engaging member by welding or the like.

Therefore, the flexible coupling 30 allows torsion of the screw shaft 12 with respect to the torsion bar T. That is, in a state where the torsion bar T and the screw shaft 12 are connected, a circumferential rotation of the screw shaft 12 with respect to the torsion bar T is allowed. Further, since the elastic bodies 33 are disposed, a high-angular-acceleration rotation of the screw shaft 12 can be prevented from being transmitted directly to the torsion bar T.

As the flexible coupling 30, in addition to the one shown, various types, for instance, a bellows type and a leaf-spring-incorporated type may be used. Further, if the flexible coupling 30 permits eccentricity, assembly of the damper D 1 becomes easy.

The advantage of providing the cup-shaped connecting member 25 is that a direct exposure of the flexible coupling 30 to a stone impact and rainwater splash during vehicle running is avoided.

On the other hand, the ball screw nut 11 screwed with the screw shaft 12 is non-rotatably connected to an upper end of a cooperative tube 40 which has a smaller diameter than the inner tube 20. The cooperative tube 40, which is not illustrated in detail, is connected at a lower end thereof to an outer tube 41 via a mounting part E on the axle side. The inner tube 20 is slidably inserted into the outer tube 41 via bearings 35 and 36.

Namely, the ball screw nut 11 is connected to the axle side of the vehicle via the cooperative tube 40 and the mounting part E on the axle side. When the ball screw nut 11 makes linear motion in a vertical direction with respect to the screw shaft 12, the ball screw nut 11 has its rotation restricted by the cooperative tube 40 fixed on the axle side, and accordingly the screw shaft 12 is forced to rotate. On the contrary, when the motor M1 is driven to rotate the screw shaft 12, the ball screw nut 11 has its rotation restricted, and accordingly the ball screw nut 11 moves in the vertical direction.

Since the bearings 35 and 36 are disposed between the outer tube 41 and the inner tube 20, the inner tube 20 is prevented from shaking with respect to the outer tube 41 and consequently the screw shaft 12 is prevented from shaking with respect to the ball screw nut 11. This prevents loading from concentrating at some balls (not shown) of the ball screw nut 11, thereby making it possible to avoid deterioration of balls or thread grooves of the screw shaft 12.

Since the deterioration of the balls or the thread grooves of the screw shaft 12 can be prevented, it is possible to maintain smoothness of the rotation of the screw shaft 12 with respect to the ball screw nut 11 and the movement of the damper D1 in an expansion and contraction direction and thereby to prevent deterioration of the damper D 1 without impairing the function as the damper D 1.

The screw shaft 12 and the ball screw nut 11, which are housed within the inner tube 20 and the outer tube 41, are free from outside interference by a stone impact or the like and thus the deterioration or the like of the damper D 1 is prevented.

At an upper end of the outer tube 41, a cylindrical stopper member 42 having a flange at an upper end thereof is fitted. An annular dust seal 43 disposed around an inner periphery of the stopper member 42 seals between the outer tube 41 and an outer periphery of the inner tube 20 to prevent entry of dust and rainwater or the like into the outer tube 41 and the inner tube 20. Accordingly quality degradation of the screw shaft 12 and the ball screw nut 11 is prevented.

The upper end of the stopper member 42, when the damper D1 contracts to a given length, comes in contact with a bellows-like cylindrical bump stopper 28 provided around the outer periphery of the upper end of the inner tube 20. This allows the stopper member 42 to buffer any shock during the contraction of the damper D 1 and to prevent collision of the lower end of the screw shaft 12 with the mounting part E on the axle side, namely, so-called bottom hitting of the damper D1, thereby improving the ride quality of the vehicle at the time of maximum contraction of the damper D 1.

On the other hand, a cushion rubber 29 disposed inside the inner tube 20 and in contact with a lower end of the cap 21 buffers any shock caused by a collision of the ball screw nut 11 with the cap 21. This allows the cushion rubber 29 to prevent the quality degradation of the ball screw nut 11 and therefore the damper D 1 and to improve the ride quality of the vehicle at the time of maximum contraction of the damper D 1.

In the damper D 1 constructed as above, when the vehicle body and axle produce linear relative motion under force from a road surface, the ball screw nut 11 connected to the axle side and the screw shaft 12 connected to the vehicle body B side also produce linear relative motion. This relative motion is converted into the rotation of the screw shaft 12 as described above, and this rotation of the screw shaft 12 is transmitted to the rotor 1 of the motor M 1 via the torsion bar T.

When the rotor 1 of the motor M 1 rotates, the coil 7 within the motor M 1 comes across a magnetic field of the magnet 4 and as a result, an induced electromotive force occurs in the coil 7. This electromotive force is energy-regenerated by the motor M1 to generate an electromagnetic force. A rotational torque produced by the electromagnetic force resulting from the induced electromotive force acts on the rotor 1 of the motor M 1 and this rotational torque suppresses the rotation of the rotor 1.

This action of suppressing the rotation of the rotor 1 suppresses the rotation of the screw shaft 12 and this in turn suppresses the linear motion of the ball screw nut 11. In this way, the damper D 1 produces a controlling force acting as a damping force by use of the electromagnetic force to absorb and damp vibration energy.

When the coil 7 is supplied with an electric current from the external power source, by adjustment of the rotational torque acting on the rotor 1, the expansion and contraction of the damper D1 can be freely controlled, i.e. the controlling force of the damper D1 may be freely controlled within the extent that it can be produced. Also, the damping property of the damper D1 may be made variable and the damper D 1 may be made to function as an actuator. When the damper D1 is controlled as an actuator in accordance with the damping force caused by the above-mentioned energy regeneration, the damper D 1 may function as an active suspension.

If the damper D1 does not have to be made to function as an actuator, i.e. the damper D1 is simply made to produce a damping force, the motor M 1 does not need to be connected to the external power source. In this case, the linear relative motion of the screw shaft 12 and the ball screw nut 11 is suppressed by an induced electromotive force which occurs in the coil 7 when the rotor 1 of the motor M1 is forced to rotate, i.e. by a rotational torque resulting from an electromagnetic force generated only by energy regeneration.

The motor M 1 mounted in the damper D 1 can detect the rotation angle of the lower end of the torsion bar T and the rotation angle of the upper end connected to the rotor shaft 3. This makes it possible to detect a torque practically acting on the rotor 1 from a difference in the rotation angle between the upper and lower ends.

By use of the torque detected in this way, the motor M1 can be controlled and therefore it is possible to control the motor M 1 more precisely.

When a torque is detected by detecting a torsion angle of a torsion bar or the like, it is a usual practice to first dispose a torsion bar between a motor and a shaft of a device driven by the motor and then mount rotation angle sensors at both ends of the torsion bar. However, the interposition of the torsion bar between the motor and the device causes the entire device to increase in size. Then, the motor M1 in the present embodiment has the torsion bar T arranged within the rotor shaft 3. This enables the torque to be detected inside the motor M1 without increasing an overall length of the motor M1 and consequently the device to which the motor M1 is applied can be downsized.

Especially in the present embodiment wherein the device is the damper D1, an overall length of the damper D1 can be reduced by at least a length of the torsion bar compared to conventional dampers, and therefore it becomes easy to ensure a stroke of the damper D1 and installability to the vehicle improves.

In the conventional dampers, a torque can not be detected, but in the damper in the present embodiment, a torque can be detected. Controlling the rotational toque outputted by the motor M1 based on the torque detected enables the ride quality of the vehicle to improve.

With the present embodiment, since the motor M1 is fixed especially inside the vehicle body B, a length of a relative-motion-section of the damper D1 equals a result obtained by subtracting a length of the motor M1 from a length of the entire damper D1. Also in this regard, it is easy to ensure the stroke of the damper D1. Namely, as compared to a case where the motor M 1 is mounted to a lower portion of the vehicle body B, i.e. outside the vehicle body B, it is possible to increase the stroke by the length of the motor M1.

In this motor M1, since the torsion bar T as the output shaft acts as a spring, when an output torque of the motor M 1 is excessive, the torque is prevented from directly acting on a drive shaft of the device and thereby a load on the device connected to the motor M 1 can be reduced.

The damper D1 in the present embodiment can decrease a rapid change in the torque acting on the screw shaft 12 transmitted from the motor M1 and reduce loads on the ball screw nut 11 and the screw shaft 12 to ensure a smooth expansion and contraction.

Since the damper D1 has the motor M1 fixed to the vehicle body B, a mass of the motor M1 is not included in a sprung weight and thus the sprung weight can be reduced.

This enables reducing a force to transmit an input of vibration from the axle side which is below a spring of the vehicle to the vehicle body side which is above the spring of the vehicle, thus improving the ride quality of the vehicle.

The flexible coupling 30 allows the torsion of the screw shaft 12 with respect to the rotor 1, i.e. the flexible coupling 30 allows, with a state where the rotor 1 and the screw shaft 12 are connected, a circumferential rotation of the screw shaft 12 with respect to the rotor 1 and therefore it is possible to reduce an unnecessary damping force produced by a moment of inertia specific to the damper D1 having the construction described herein.

Now the damping force produced by the moment of inertia will be described. The damping force produced by the damper D 1 is generally a total sum of a moment of inertia of the screw shaft 12, a moment of inertia of the rotor 1 of the motor M 1, a moment of inertia of the ball screw nut 11, and an electromagnetic force generated by the motor M1. From the fact that the angular acceleration of the rotor 1 of the motor M1 is proportional to acceleration of the expansion and contraction motion of the damper D1, each moment of inertia increases in proportion to the acceleration of the expansion and contraction motion of the damper D1. However, the moment of inertia of the screw shaft 12 is relatively great and therefore the effect of this moment of inertia on the damping force cannot be ignored.

Since the above-mentioned moments of inertia are proportional to the acceleration of the expansion and contraction motion, the damper D1 produces a damping force independently from the electromagnetic force of the motor M1 against an axial force of the damper D 1 inputted from a road surface or the like to the damper D1. The damper D1, especially when a rapid axial force is inputted, produces a higher damping force, thus causing a vehicle occupant to perceive a feeling of roughness.

As a result, prior to a damping force always dependent on the electromagnetic force, a damping force is produced by the moment of inertia of the screw shaft 12. Since the damping force produced by the moment of inertia of the screw shaft 12, which is dependent on the acceleration of the expansion and contraction motion of the damper D1, is difficult to control, the smaller the moment of inertia of the screw shaft 12 is, the more the effect of the moment of inertia of the screw shaft 12 on the damping force can be suppressed. In addition to this, since the flexible coupling 30 allows the torsion of the screw shaft 12 as described above, the damping force produced by the moment of inertia of the screw shaft 12 can be reduced by the flexible coupling 30. This allows the controllability of the damping force produced by the damper D1 to improve and when the damper D1 is applied to a vehicle, the ride quality of the vehicle can be improved.

Since the torsion bar T of the motor M 1 also acts as a spring, the reduction in the damping force produced by the above-mentioned moment of inertia is also done by the torsion bar T. Namely, it is possible to reduce the damping force produced by the above-mentioned moment of inertia even if the flexible coupling 30 is not used. On the contrary, even if a member with a relatively high torsional rigidity is used for the output shaft, it is possible to reduce the damping force produced by the moment of inertia as described above by the flexible coupling 30 which is a coupling which allows displacement of the screw shaft 12 with respect to the output shaft.

Use of both the torsion bar T and the flexible coupling 30 enables the damping force produced by the moment of inertia to be reduced more effectively.

Further, by arranging the motor M1 inside the vehicle body B, it is possible to use electric wires (not shown) extended from each electrode of the motor M 1 within the vehicle body B, and this makes it easy to connect the electric wires to an external control unit or control circuit. In this case, the electric wires are housed within the vehicle body B and therefore a possibility of deterioration of the electric wires can be reduced.

In the present embodiment, the motor M1 is fixed inside the vehicle body B, but even if the motor M 1 is fixed outside the vehicle body B, the effect capable of reducing the overall length of the damper is not lost.

Next, a damper D2 in another preferred embodiment will be described. The same members as in the above-mentioned embodiment will be identified by the same reference numerals and detailed descriptions of those members will be omitted.

The damper D2 in the another embodiment is, as shown in FIG. 3, different from the above-mentioned embodiment in that an outer periphery of an intermediate portion of the torsion bar T as an output shaft of a motor M2 is covered with a cylindrical rubber 70 which is an elastic body.

Since the rubber 70 has an outer periphery thereof in contact with the inner periphery of the rotor shaft 3, torsional vibration of the torsion bar T can be damped by means of the rubber 70.

Namely, when the torsion bar T twists with respect to the rotor shaft 3, friction is generated between an outer peripheral surface of the torsion bar T and an inner peripheral side surface of the rubber 70, and torsional vibration energy of the torsion bar T is converted into heat energy or the like, with the result that the torsional vibration of the torsion bar T is damped.

Additionally, since an outer peripheral surface of the rubber 70 is in contact with the inner peripheral surface of the rotor shaft 3, friction is generated between the inner peripheral surface of the rotor shaft 3 and the outer peripheral side surface of the rubber 70, and torsional vibration energy of the torsion bar T is converted into heat energy or the like, with the result that the torsional vibration of the torsion bar T is damped.

Even if the outer peripheral surface of the rubber 70 is not in contact with the inner peripheral surface of the rotor shaft 3, the torsional vibration of the torsion bar T can be damped, but if so, a contact state provides a more effective result.

Therefore, in the another embodiment, after the torsion bar T is twisted, the torsional vibration can be damped by a spring action of the output shaft for a short period of time, and accordingly the device to which the motor M2 is connected can be stably driven.

Namely, in the damper D2 in which the motor M2 is mounted, the torsional vibration of the torsion bar T does not cause variations in the damping force produced to occur and the controllability to be worsened. Accordingly, the ride quality of the vehicle can be improved.

In the above-mentioned another embodiment, the outer periphery of the torsion bar T is covered with the rubber 70, but the torsion bar may be formed in a hollow shape and the inside of the torsion bar may be filled with rubber, clay, or granular objects such as sand and casting sand. Also in this case, since the torsional vibration energy of the torsion bar can be damped by friction between the torsion bar and the filler such as rubber, the same operation and effect as above are achieved.

## Claims

1. A damper (D1), comprising:
- a screw nut (11) connected to either one of an axle and a vehicle body;
- a screw shaft (12) rotatably screwed in the screw nut (11); and
- a motor (M1) which is connected to the other of the axle and the vehicle body and to which rotation of the screw shaft (12) is transmitted, **characterized in that** the motor (M1) comprises:
- a hollow rotor shaft (3);
- an output shaft (T) inserted into the rotor shaft (3), one end of the output shaft (T) being connected to the rotor shaft (3) and the other end of the output shaft (T) being connected to the screw shaft (12); and
- a detecting device (K1,K2) which detects a torsion angle of the output shaft (T) varying with a torque acting on the output shaft (T).

2. The damper (D1) according to claim 1, wherein the detecting device (K1 ,K2) is formed of a first rotation angle detecting device (K1) which detects a rotation angle at one end of the output shaft (T) and a second rotation angle detecting device (K2) which detects a rotation angle at the other end of the output shaft (T).

3. The damper (D1) according to claim 1, wherein the output shaft (T) is a torsion bar.

4. The damper (D1) according to claim 1, wherein an elastic member (70) is provided around an outer periphery of the output shaft (T).

5. The damper (D1) according to claim 4 wherein an outer periphery of the elastic member (70) is in contact with an inner periphery of the rotor shaft (3).

6. The damper (D1) according to claim 1, wherein the output shaft (T) and the screw shaft (12) are connected via a coupling (30) which allows displacement of the screw shaft (12) with respect to the output shaft (T).

## Patentansprüche

1. Dämpfer (D1), aufweisend:
- eine mit entweder einer Achse oder einer Fahrzeugkarosserie verbundene Schraubenmutter (11);
- ein drehbar in die Schraubenmutter (11) eingeschraubter Schraubenschaft (12); und
- einen Motor (M1), der mit entweder der Achse oder der Fahrzeugkarosserie verbunden ist und auf den die Drehung des Schraubenschafts (12) übertragen wird, **dadurch gekennzeichnet, dass** der Motor (M1) aufweist:
- eine hohle Rotorwelle (3);
- eine in die Rotorwelle (3) eingesetzte Abtriebswelle (T), wobei ein Ende der Abtriebswelle (T) mit der Rotorwelle (3) und das andere Ende der Abtriebswelle (T) mit dem Schraubenschaft (12) verbunden ist und
- eine Detektiervorrichtung (K1,K2), die einen mit dem auf die Abtriebswelle (T) einwirkenden Drehmoment variierenden Drehwinkel der Abtriebswelle (T) detektiert.

2. Dämpfer (D1) nach Anspruch 1, **dadurch gekennzeichnet, dass** die Detektiervorrichtung (K1,K2) durch eine erste Drehwinkeldetektiervorrichtung (K1), die einen Drehwinkel an einem Ende der Abtriebswelle (T) detektiert, und eine zweite Drehwinkeldetektiervorrichtung (K2), die einen Drehwinkel am anderen Ende der Abtriebswelle (T) detektiert, gebildet wird.

3. Dämpfer (D1) nach Anspruch 1, **dadurch gekennzeichnet, dass** die Abtriebswelle (T) ein Torsionsstab ist.

4. Dämpfer (D1) nach Anspruch 1, **dadurch gekennzeichnet, dass** ein elastisches Bauteil (70) um die äußere Peripherie der Abtriebswelle (T) herum angeordnet ist.

5. Dämpfer (D1) nach Anspruch 4, **dadurch gekennzeichnet, dass** eine äußere Peripherie des elastischen Bauteils (70) mit einer inneren Peripherie der Rotorwelle (3) in Kontakt ist.

6. Dämpfer (D1) nach Anspruch 1, **dadurch gekennzeichnet, dass** die Abtriebswelle (T) und der Schraubenschaft (12) über eine Kupplung (30) verbunden sind, welche eine Verschiebung des Schraubenschafts (12) in Bezug auf die Abtriebswelle (T) ermöglicht.

## Revendications

1. Amortisseur (D1), comportant:
- un écrou (11) connecté soit à un arbre soit à une carrosserie de véhicule ;
- une tige de vis (12) vissée de manière rotative dans l'écrou (11), et
- un moteur (M1) qui est connecté à l'autre respectivement des arbre et carrosserie de véhicule et auquel la rotation de la tige de vis (12) est tramise, **caractérisé en ce que** le moteur (M1) comporte :
- un arbre de rotor creux (3);
- un arbre de sortie (T) inséré dans l'arbre de rotor (3), une extrémité de l'arbre de sortie (T) étant connectée à l'arbre de rotor (3) et l'autre extrémité de l'arbre de sortie (T) étant connectée à la tige de vis (12) ; et
- un dispositif de détection (K1,K2) qui détecte un angle de torsion de l'arbre de sortie (T) variant avec le couple agissant sur l'arbre de sortie (T).

2. Amortisseur (D1) selon la revendication 1, dans lequel le dispositif de détection (K1,K2) est formé par un premier dispositif de détection de l'angle de rotation (K1) qui détecte un angle de rotation à une extrémité de l'arbre de sortie (T) et un second dispositif de détection de l'angle de rotation (K2) qui détecte un angle de rotation à l'autre extrémité de l'arbre de sortie (T).

3. Amortisseur (D1) selon la revendication 1, dans lequel l'arbre de sortie (T) est une barre de torsion.

4. Amortisseur (D1) selon la revendication 1, dans lequel un élément élastique (70) est prévu autour d'une périphérie extérieure de l'arbre de sortie (T).

5. Amortisseur (D1) selon la revendication 4, dans lequel une périphérie extérieure de l'élément élastique (70) est en contact avec une périphérie intérieure de l'arbre de rotor (3).

6. Amortisseur (D1) selon la revendication 1, dans lequel l'arbre de sortie (T) et la tige de vis (12) sont connectés par l'intermédiaire d'un couplage (30) qui permet le déplacement de la tige de vis (12) par rapport à l'arbre de sortie (T).
